## Europäisches Patentamt
## European Patent Office
## Office européen des brevets

(19)

(11) Veröffentlichungsnummer: **0 017 184**
**B1**

(12)

# EUROPÄISCHE PATENTSCHRIFT

(45) Veröffentlichungstag der Patentschrift:
24.10.84

(51) Int. Cl.³: **A 23 G 3/00**

(21) Anmeldenummer: **80101666.8**

(22) Anmeldetag: **27.03.80**

(54) Zuckerfreie Süsswarenmasse auf der Grundlage von Sorbit, Xylit und eines zuckerfreien Quellstoffs und Verfahren zu ihrer Herstellung.

(30) Priorität: **29.03.79 DE 2912411**

(43) Veröffentlichungstag der Anmeldung:
**15.10.80 Patentblatt 80/21**

(45) Bekanntmachung des Hinweises auf die Patenterteilung:
**24.10.84 Patentblatt 84/43**

(84) Benannte Vertragsstaaten:
**AT BE CH DE FR GB IT LU NL SE**

(56) Entgegenhaltungen:
**DE - B - 1 299 990**
**FR - A - 2 334 311**
**FR - A - 2 338 651**
**FR - A - 2 357 185**
**GB - A - 1 295 417**
**GB - A - 1 481 738**
**US - A - 3 914 434**

**RESEARCH DISCLOSURE, No. 152, Dezember 1976, Seite 4, Zusammenfassung 15207, (Ungenannt): "Hard Candies"**

**Die Akte enthält technische Angaben, die nach dem Eingang der Anmeldung eingereicht wurden und die nicht in dieser Patentschrift enthalten sind.**

(73) Patentinhaber: **AUGUST STORCK KG,**
**Paulinenweg 12 Postfach 15 40, D-4802 Halle/Westfalen (DE)**

(72) Erfinder: **Andersen, Geert, Dr., Hagedornstrasse 18, D-4802 Halle/Westfalen (DE)**

(74) Vertreter: **Patentanwälte TER MEER - MÜLLER - STEINMEISTER, Triftstrasse 4, D-8000 München 22 (DE)**

## Beschreibung

Die vorliegende Erfindung betrifft eine zuckerfreie Süsswarenmasse auf der Grundlage von Sorbit, Xylit und eines zuckerfreien Quellstoffs sowie ein Verfahren zu ihrer Herstellung.

Es ist bekannt, dass Nahrungs-, Genuss- und Arzneimittel mit hohem Gehalt an Zuckern, insbesondere an Saccharose, Fructose und Dextrose, bei unzureichender Zahnhygiene infolge Säurebildung im Mund durch bestimmte Bakterien den Zahnschmelz angreifen können. Deshalb wird der Bedarf an zuckerfreien Süsswaren weltweit immer grösser.

Es wurde bereits in grossem Umfang versucht zuckerfreie Süsswaren herzustellen. Hierbei handelt es sich in der Regel um Sorbit- oder Xylitkomprimate, Xylitkaugummis, Sorbitschmelzen, Xylitrekristallisate oder Sorbitgelees bzw. -pastillen. Weiterhin ist es möglich, unter Verwendung von hydriertem Stärkesirup Hartbonbons herzustellen. Diese sogenannten Zuckeraustauschstoffe weisen den Vorteil auf, dass sie auch bei unzureichender Zahnhygiene durch den Stoffwechsel der im Mund vorhandenen Bakterienflora nicht unter Bildung von den Zahnschmelz angreifenden Produkten abgebaut werden.

Weiterhin ist es aus der DE-B-1 692 763 bekannt, Lactose mit Sorbit, Mannit oder Galaktose zu kombinieren und unter Zusatz von wenig gärfähigen Stärkehydrolysaten für die Herstellung von süssen Nahrungs- und Genussmitteln und von Arzneisirupen zu verwenden. Die nach diesem Stand der Technik zwangsläufig eingesetzte Lactose besitzt den Nachteil, dass sie in Wasser relativ schwach löslich ist und zu Verdauungsstörungen Anlass geben kann. Die unter Verwendung dieser Zuckerkombination hergestellten süssen Nahrungs- und Genussmittel bzw. Arzneisirupe müssen ferner, da die Süsskraft der verwendeten Zuckerkombination nicht ausreicht, künstliche Süssstoffe enthalten. Dies stellt einen erheblichen Nachteil dar, da diese Süssstoffe einen unangenehmen und langanhaltenden Beigeschmack entfalten, nicht die für Süsswaren gewünschte Süsse vermitteln und darüber hinaus lebensmittelrechtliche Probleme mit sich bringen.

Aus der DE-A-2 409 107 ist es weiterhin bekannt, zuckerlosen Hartkonfekt auf der Grundlage von Sorbit oder einem Gemisch aus Sorbit und Mannit herzustellen, wobei es zur Bildung eines klaren und harten Produkts erforderlich ist, eine komplizierte Verfahrensabfolge unter genau einzuhaltenden Bedingungen durchzuführen.

In der DE-A-2 659 424 ist ein mit Zucker gesüsster Kaugummi beschrieben, der zur Verbesserung seiner Lagerqualität bis zu 50 Gew.-% Xylit enthält. In dieser Druckschrift ist angegeben, dass die US-PS 3 899 593 einen zuckerfreien Kaugummi beschreibt, der einen grösseren Anteil Xylit enthält, indem 50 bis 80 Gew.-% der gesamten Gummimasse aus Xylit bestehen, und der daürber hinaus auch geringe Mengen an Sorbit enthalten kann.

In der deutschen zahnärztlichen Zeitschrift 26 (1971) Heft 11, Seite 1088, sind Gummizuckerwaren auf der Basis von Gummi arabicum oder Agar-Agar beschrieben, die als einziges Süssmittel Sorbit enthalten.

In der DE-A-2 853 602 sind zuckerfreie Hartbonbons beschrieben, die aus Sorbit, Xylit, Äpfelsäure und einem hydrierten Stärkehydrolysat bestehen können.

Aus der GB-A-1 526 020 ist ein gepresstes Produkt in Form einer Tablette bekannt, das Xylit und ein Polyol, wie Mannit und/oder Sorbit enthalten kann. Diese Xylitkomprimate, die die Bestandteile wegen ihrer Herstellung aus einer Pulvermischung nicht in homogener Form enthalten können, stellen keine glasigen, zähplastischen, zuckerfreien Bonbons dar, die sich auf den üblichen Bearbeitungsvorrichtungen durch Prägen, Giessen, Walzen und/oder Ausstechen verarbeiten lassen.

Schliesslich offenbart die DE-A-2 729 896 ein Verfahren zur Herstellung von Xylit enthaltenden Hartkaramellen, das darin besteht, dass man einer Xylitschmelze, bei einer Temperatur von höchstens etwa dem Schmelzpunkt von Xylit, Pulverxylit zusetzt. Weiterhin ist es möglich, der Schmelze bis zu 10 Gew.-% Sorbit zuzugeben. Mit Hilfe dieser Verfahrensweise erhält man jedoch ebenfalls nur sprödharte polykristalline, wasserfreie Produkte, die nicht ein dauerhaft glasartiges, zähplastisches Gefüge besitzen, wie es bei der Herstellung von Bonbons angestrebt wird.

Die FR-A-2 334 311 beschreibt essbare Produkte, die als hauptsächliches Süssungsmittel eine Kombination bestimmter Zuckeralkohole, wie Xylit und Sorbit enthalten und als zusätzlichen Bestandteil noch einen zuckerfreien Quellstoff enthalten können. Dabei offenbart das Beispiel eine Pastillenzusammensetzung aus 50% Gummi arabicum, 40% Sorbit, 8% Xylit und 2% Geschmackstoffen, wobei angegeben ist, dass das Gemisch in Stärkeformen gegossen wird und Pastillen mit gutem Geschmack und einer günstigen Konsistenz ergibt. Es handelt sich dabei um ein feinkristallines Produkt, welches nur durch Vergiessen des hochübersättigten Kristallisats in Stärke verformt werden kann.

Schliesslich beschreibt die GB-A-1 481 738 eine Hartkaramellmasse aus 40 bis 60 Gew.-% eines modifizierten Stärkehydrolysats, 10 bis 60 Gew.-% eines Zuckers oder Zuckeralkohols und 0 bis 30 Gew.-% Lactose. Als Zuckeralkohole sind Hexit, Sorbit und Manni genannt.

Alle diese für die Herstellung von zuckerfreien oder zuckerarmen Süsswaren verwendeten Zuckeraustauschstoffe besitzen jedoch bisher den Nachteil, dass sie sich nur in Form von Komprimaten, Schmelzen oder festen Kristalldispersionen verarbeiten oder in Kaugummis einarbeiten lassen. So neigt Xylit extrem stark zum Auskristallisieren und bildet kein dauerhaft glasartiges Gefüge, wie es bei der Herstellung von Bonbons angestrebt wird. Sorbit allein ist wiederum nicht süss genug und hat einen brennenden, faden Geschmack, so dass sich dieses Material ebenfalls nicht für die Herstellung von Süsswaren anbietet. Darüber hinaus ist Sorbit wegen seiner Hygroskopizität nachteilig, da die damit gebildeten Süsswaren feucht, klebrig und schmierig werden können, was ebenfalls zu vermeiden ist.

Es ist also festzustellen, dass Xylit im Gegensatz zu Sorbit zwar eine ausreichende Süsskraft besitzt, jedoch nicht in der gewünschten Weise wie die üblicherweise eingesetzte Saccharose bei der Herstellung von Zuckerwaren eingesetzt werden kann. Die vorbekannten Produkte besitzen somit erhebliche Mängel, indem sie entweder zu wenig süss sind, zu teure Ausgangsmaterialien erforderlich machen, nicht die gewünschte zähplastische Konsistenz aufweisen, nicht ausreichend lagerbeständig sind oder lebensmittelrechtlich nicht zugelassene Bestandteile enthalten müssen.

Der vorliegenden Erfindung liegt somit die Aufgabe zugrunde, eine zum Beispiel für die Herstellung von Bonbons geeignete zuckerfreie Süsswarenmasse anzugeben, die auf der Grundlage von zulässigen Rohstoffen und unter Anwendung einfacher, üblicher Herstellungsmethoden hergestellt und verarbeitet werden kann und zu einem zuckerfreien Produkt führt.

Es wurde nun überraschenderweise gefunden, dass es mit Hilfe bestimmter Bestandteile möglich wird, einer zuckerfreien Süsswarenmasse auf der Grundlage von Sorbit, Xylit und eines zuckerfreien Quellstoffs die notwendige Plastizität und Körperhaftigkeit zu verleihen. Die so erhaltene Masse kann zu als zuckerfrei anzusprechenden zähplastischen Bonbons und insbesondere Hartbonbons oder Gummibonbons verarbeitet werden. Als unerwartet ist dabei anzusehen, dass hierdurch die extreme Rekristallisationsneigung des Xylits unterdrückt wird und ein Produkt erhalten wird, das in einer glasigen Schmelze wie ein Hartbonbons erstarrt und sich prägen, giessen, walzen und/oder ausstechen lässt.

Gegenstand der Erfindung ist eine zuckerfreie Süsswarenmasse auf der Grundlage von Sorbit, Xylit und eines zuckerfreien Quellstoffs, die gekennzeichnet ist durch eine zähplastische Masse, bestehend aus 20 bis 50 Gew.-% verzuckertem Maltodextrin mit einem Dextroseäquivalent von 1 bis 10 als zuckerfreiem Quellstoff, 20 bis 35 Gew.-% Xylit, 0,5 bis 3 Gew.-% Wasser, 0,1 bis 5 Gew.-% üblichen Aromastoffen, Geschmacksstoffen, Säuren und/oder Farbstoffen und 7 bis 59,4 Gew.-% Sorbit, erhältlich durch Lösen von Xylit, Sorbit und Maltodextrin in Wasser, Einkochen bis zu der für die Weiterbehandlung gewünschten Konsistenz und einen Restwassergehalt von 0,5 bis 3 Gew.-% und Zugabe der gewünschten Aromastoffe, Geschmacksstoffe, Säuren und/oder Farbstoffe zu der Masse.

Das als zuckerfreier Quellstoff verwendete niedrigverzuckerte Maltodextrin besitzt ein Dextroseäquivalent von 1 bis 10 und insbesondere von 3 bis 5, so dass es im Sinne des Lebensmittelgesetztes als zuckerfrei anzusehen ist.

Vorzugsweise ist das niedrigverzuckerte Maltodextrin in einer Gesamtmenge von etwa 40 Gew.-% (als Trockensubstanz gerechnet) enthalten, wodurch sich der zusätzliche Vorteil ergibt, dass die gebildete Süsswarenmassen kalorienvermindert ist.

Der in der erfindungsgemässen Süsswarenmasse in einer Menge von 20 bis 35 Gew.-% (als Trockensubstanz gerechnet) verwendete Xylit verleiht der Masse die erforderliche Süsse. Als Streckmittel enthält die beanspruchte Süssware Sorbit, der als solcher süss genug ist.

Mit Vorteil enthält die beanspruchte Süsswarenmasse 0,5 bis 3 Gew.-% Wasser, während die üblichen Aromastoffe, Geschmacksstoffe, Säuren und/oder Farbstoffe in Mengen von 0,1 bis 5 Gew.-% und bevorzugter in Mengen von 0,3 bis 1,5 Gew.-%, jeweils als Trockensubstanz gerechnet, vorhanden sind.

Gegenstand der Erfindung ist ferner ein Verfahren zur Herstellung der beanspruchten zuckerfreien Süsswarenmasse, das darin besteht, dass man mindestens einen zuckerfreien Quellstoff, Xylit und Sorbit in Wasser löst, was ohne weiteres unter Bildung einer klaren Lösung möglich ist, die erhaltene Masse bis zu der für die Weiterbehandlung gewünschten Konsistenz und einem Restwassergehalt von 0,5 bis 3 Gew.-% einkocht und dann gegebenenfalls die gewünschten Aromastoffe, Geschmacksstoffe, Säuren und/oder Farbstoffe in die Masse einbringt.

Die beanspruchte Süsswarenmasse lässt sich für die Herstellung beliebiger Süsswaren verwenden, wie gefüllte und ungefüllte Hart- und Weichkaramellen bzw. -bonbons, Schaumzuckerwaren, Gummizuckerwaren, Lakritzwaren, Dragees, Pastillen etc. und insbesondere von zähplastischen Bonbons.

Erfindungsgemäss wird somit ein Produkt geschaffen, das zuckerfrei und/oder kalorienvermindert ist und zu einem glasigen, zähplastischen, zuckerfreien Bonbon verarbeitet werden kann.

Die erfindungsgemässe zähplastische, zuckerfreie Süsswarenmasse ist eine weiche, kaubare Masse mit einer harten bis gummiartigen Konsistenz, die nicht kristallin ist. Da diese Süsswarenmasse aus der Lösung gewonnen ist, enthält sie sämtliche Bestandteile in homogener Form. Es hat sich gezeigt, dass diese Süsswarenmasse auch bei längerer Lagerung nicht kristallisiert, was angesichts der starken Kristallisationsneigung der enthaltenen Zuckeralkohole Xylit und Sorbit als überraschend anzusehen ist. Die aus dieser Süsswarenmasse gebildeten Süsswaren sind insbesondere und mit Vorteil zähplastische Bonbons, die zunächst hart sind wie übliche Hartkaramellen und dann beim Kauen eine weiche, gummiartige Konsistenz annehmen. Dabei entfalten sowohl diese Süsswarenmasse als auch die daraus gebildeten Süsswaren eine angenehme, abgerundete Geschmackskomposition, ohne den brennenden, faden Geschmack des Sorbits zu zeigen.

## Patentansprüche

1. Zuckerfreie Süsswarenmasse auf der Grundlage von Sorbit, Xylit und eines zuckerfreien Quellstoffs, gekennzeichnet durch eine zähplastische Masse, bestehend aus

20 bis 50 Gew.-% niedrig verzuckertem Maltodextrin mit einem Dextorseäquivalent von 1 bis 10 als zuckerfreiem Quellstoff,

20 bis 35 Gew.-% Xylit,

0,5 bis 3 Gew.-% Wasser,

0,1 bis 5 Gew.-% üblichen Aromastoffen, Geschmackstoffen, Säuren und/oder Farbstoffen und

7 bis 59,4 Gew.-% Sorbit,

erhältlich durch Lösen von Xylit, Sorbit und Maltodextrin in Wasser, Einkochen bis zu der für die Weiterbehandlung gewünschten Konsistenz und einen Restwassergehalt von 0,5 bis 3 Gew.-% und Zugabe der gewünschten Aromastoffe, Geschmackstoffe, Säuren und/oder Farbstoffe zu der Masse.

2. Verfahren zur Herstellung der Süsswarenmasse nach Anspruch 1, dadurch gekennzeichnet, dass man Xylit, Sorbit und das niedrig verzuckerte Maltodextrin in Wasser löst und bis zu der für die Weiterbehandlung gewünschten Konsistenz und einem Restwassergehalt von 0,5 bis 3 Gew.-% einkocht und dann die gewünschten Aromastoffe, Geschmackstoffe, Säuren und/oder Farbstoffe zusetzt.

## Claims

1. Sugar-free confectionery material on the basis of sorbitol, xylitol and a sugar-free swelling agent, characterized by a tough-plastic composition comprising

20 to 50% by weight of a low-sugar maltodextrin having a dextrose equivalent of 1 to 10 as sugar-free swelling agent,

20 to 35% by weight xylitol,

0.5 to 3% by weight water,

0.1 to 5% by weight of usual aromatic substances, flavouring agents, acids and/or dyes and

7 to 59.4% by weight sorbitol,

obtainable by dissolving xylitol, sorbitol and maltodextrin in water, boiling to the necessary consistency for the further treatment and a redisual water content of 0.5 to 3% by weight and adding the desired aromatic substances, flavouring agents, acids and/or dyes to the composition.

2. A process for the manufacture of the confectionery according to claim 1, characterized by dissolving xylitol, sorbitol and the low-sugar maltodextrin in water boiling to the necessary consistency for the further treatment and a residual water content of 0.5 to 3% by weight and adding the desired aromatic substances, flavouring agents, acids and/or dyes.

## Revendications

1. Produit édulcorant dépourvu de sucre à base de sorbitol, xylitol et d'un agent gonflant dépourvu de sucre, caractérisé par une masse visqueuse et déformable constituée de:

20 à 50% en poids d'une malto-dextrine faiblement saccharifiée ayant un équivalent dextrose de 1 à 10 en tant qu'agent gonflant dépourvu de sucre,

20 à 35% en poids de xylitol,

0,5 à 3% en poids d'eau,

0,1 à 5% en poids d'agents aromatisants, d'agents de saveur, d'acides et/ou de colorants usuels et

7 à 59,4% en poids de sorbitol,

pouvant être obtenu par dissolution de xylitol, sorbitol et de malto-dextrine dans l'eau, concentration jusqu'à la consistance souhaitée pour le traitement ultérieur et une teneur résiduelle en eau de 0,5 à 3% en poids, et addition des agents aromatisants, des agents de saveur, des acides et/ou des colorants souhaités à la masse.

2. Procédé de préparation du produit édulcorant selon la revendication 1, caractérisé en ce que l'on dissout dans l'eau du xylitol, du sorbitol et la malto-dextrine faiblement saccharifiée, on concentre jusqu'à la consistance souhaitée pour le traitement ultérieur et une teneur résiduelle en eau de 0,5 à 3% et l'on ajoute les agents aromatisants, les agents de saveur, les acides et/ou les colorants souhaités.